# EUROPÄISCHE PATENTANMELDUNG

(11) **EP 1 884 347 A1**
(43) Veröffentlichungstag der Anmeldung: **06.02.2008**
(21) Anmeldenummer: 06118461.0
(22) Anmeldetag: 04.08.2006
(51) Int. Cl.: B29C 65/10

(54) **Vorrichtung zum Verschweissen von Kunststoffbahnen**

(71) Anmelder: Sika Technology AG, 6340 Baar (CH)
(72) Erfinder: Voney, Hansruedi, 4656 Starrkirch-Wil (CH); Flück, Armin, 6064 Kerns (CH)

(57) **Zusammenfassung**

Bei einer Vorrichtung (1,11) zum Verschweissen von Kunststoffbahnen, umfasst diese einen Düsen-Vorsatz (1), wobei der Düsen-Vorsatz (1) einen Schleifkörper (5) aufweist.
Der Düsen-Vorsatz (1) ist beweglich gehalten. Dadurch Iiegt der Düsenvorsatz immer mit definierter Kraft auf der unteren zu verschweissenden Bahn und es entsteht eine konstante, gute Nahtqualität.

## Beschreibung

### Technisches Gebiet

Die vorliegende Erfindung betrifft eine Vorrichtung zum Verschweissen von Folien bzw. Kunststoffbahnen gemäss dem Oberbegriff des Anspruchs 1.

### Stand der Technik

Vorrichtungen zum Verschweissen von Kunststoffbahnen finden ihre Verwendung insbesondere beim Verbinden von Kunststoffbahnen zum Abdichten von Hoch- oder Tiefbauten, insbesondere im Erd- und Wasserbau, beispielsweise bei Flachdächern, Steildächern, zeltartigen Dachkonstruktionen, Schwimmbecken, etc. und haben insbesondere den Richtlinien des Deutschen Verbandes für Schweisstechnik "DVS 2225" zu genügen.

Zur Warmgasverschweissung derartiger Kunststoffbahnen werden Vorrichtungen verwendet, wie sie beispielsweise aus der WO 2004/085759 oder US-6,325,126 bekannt sind. Diese Vorrichtungen weisen ein Warmgasgebläse auf, mit welchem erhitzte Luft mit ca. 250° bis 600° Celsius durch eine flache Breitschlitzdüse zwischen die thermoplastischen Folien geblasen wird, um die zu verbindenden Folienbereiche zu erweichen. Die derart plastifizierten Folienbereiche werden anschliessend mit Hilfe von Anpresswalzen oder -rollen miteinander stoffschlüssig verbunden, d.h. verschweisst.

Es zeigt sich, dass bei längerer Lagerung der Kunststoffbahnen im Freien, die Oberflächen dieser Bahnen unter Witterungseinflüssen, insbesondere unter dem Einfluss von Regen, Kälte, Luftverschmutzungen und/oder Sonneneinstrahlung ihre Beschaffenheit verändern. Dies gilt für alle Materialien aus denen Kunststoffbahnen gefertigt sind. Diese Veränderung in der Beschaffenheit erschwert das einwandfreie Verschweissen der Folien und kann aufwendige Vorarbeiten, insbesondere Reinigungsvorgänge mit lösemittelhaltigen Produkten erforderlich machen. Es versteht sich, dass daraus resultierende lokale Unterschiede in der Nahtqualität unerwünscht sind.

Es ist deshalb mit der EP 1 358 993 auch schon vorgeschlagen worden, die Breitschlitzdüse der Schweissvorrichtungen mit einer der schlitzförmigen Warmgasdüse nachgelagerten Schleifeinrichtung, im Folgenden auch Düsen-Vorsatz genannt, zu versehen. Dieser Düsen-Vorsatz besteht im Wesentlichen aus einer ein- oder mehrteiligen, sich konisch verjüngenden Walzenanordnung und führt zu qualitativ hoch stehenden Schweissverbindungen. Es besteht jedoch das Bedürfnis, die Schweissgüte weiter zu erhöhen und damit auch die Wirtschaftlichkeit der Montage, resp. Verlegung der Abdichtungsbahnen zu verbessern.

### Darstellung der Erfindung

Es ist deshalb Aufgabe der vorliegenden Erfindung, eine Vorrichtung zur Verschweissung von Kunststoffbahnen zu schaffen, welche es erlaubt, Kunststoffbahnen mittels Warmgasschweissen zu verschweissen, ohne dadurch Qualitätseinbussen, insbesondere Schwachstellen, bei der Verschweissung hinnehmen zu müssen.

Erfindungsgemäss wird dies durch die Merkmale des ersten Anspruches erreicht.

Kern der Erfindung ist es also, dass der Düsen-Vorsatz beweglich gehalten ist.

Die Vorteile der Erfindung sind unter anderem darin zu sehen, dass durch die erfindungsgemässen Vorrichtungen zum Verschweissen von Kunststoffbahnen mit einer beweglichen Halterung des Düsen-Vorsatzes gewährleistet wird, dass der Anpressdruck des Düsenvorsatzes immer genügend gross ist. Durch die bewegliche Halterung des Düsenvorsatzes und den somit erzielten konstantem Anpressdruck wird eine Verbesserung der Nahtqualität der zu verschweissenden Kunststoffdichtungsbahnen erreicht.
Somit liegt der Düsenvorsatz immer mit definierter Kraft auf der unteren zu verschweissenden Bahn. Damit entsteht eine konstante, gute Nahtqualität, insbesondere bei T-Stössen kann so eine gute Nahtqualität erzielt werden.

Neben der Verwendung von herkömmlichen Schleifkörpern, ist es insbesondere vorteilhaft, wenn die Schleifkörperelemente auf einer Lagerachse gehalten werden und diese ein unterschiedlich grosses, radiales Spiel (clearance) zur Lagerachse aufweisen. Der Querschnitt des aus diesen Schleifkörperelementen gebildeten Schleifkörpers kann an sich beliebig, insbesondere kreisförmig, ellipsenförmig oder tropfenförmig sein. Es versteht sich, dass dieser Schleifkörper auch aus Schleifkörperelementen mit einem kantigen Querschnittsprofil gebildet sein kann. Der gesamte Schleifkörper kann dabei walzenförmig sein oder eine sich konisch verjüngende Form aufweisen. In der Praxis haben sich Schleifkörper bewährt, welche je nach Material der Kunststoffbahnen eine glatte oder strukturierte Oberfläche aufweisen. Dabei hat sich gezeigt, dass für die Verschweissung von PVC-Bahnen ein glatter Schleifkörper zu besseren Schweissergebnissen führt, während für die Verschweissung von Bahnen auf Polyolefinbasis die Verwendung eines Schweisskörpers mit einer strukturierten Oberfläche zu einer besseren Verschweissung führt. Dabei wird der Fachmann ohne weiteren erfinderischen Aufwand die für das jeweilige Material geeignetste Strukturierung wählen, insbesondere gerillte oder schraubenartig strukturierte Schleifkörper verwenden. Durch die Verwendung von auswechselbaren Düsen-Vorsätzen für unterschiedliche Materialien, bspw. auf Basis von Thermoplasten, Elastomeren, Polyolefinen oder anderen Polymeren lässt sich dieselbe Schweissvorrichtung verwenden.
Es ist besonders zweckmässig, wenn die Bohrung der Schleifkörper exzentrisch ausgeführt wird.

Weitere vorteilhafte Ausgestaltungen der Erfindung ergeben sich aus den abhängigen Ansprüchen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1:: eine schematische Ansicht einer mit einem Düsen-Vorsatz versehenen Heissluftdüse;
- Fig. 2:: eine schematische Darstellung eines Düsen-Vorsatzes;
- Fig. 3:: eine schematische Darstellung eines erfindungsgemässen Düsen-Vorsatzes mit beweglicher Halterung;
- Fig. 4A, 4B:: eine schematische Darstellung erfindungsgemässer beweglicher Halterungen;
- Fig. 5:: eine schematische Darstellung einer erfindungsgemässen beweglichen Halterung;

Es sind nur die für das unmittelbare Verständnis der Erfindung wesentlichen Elemente gezeigt. Nicht dargestellt sind beispielsweise der Heissgaserzeuger und der Schweissautomat, wie sie z.B. aus der EP 1 358 993 bekannt sind.

### Weg zur Ausführung der Erfindung

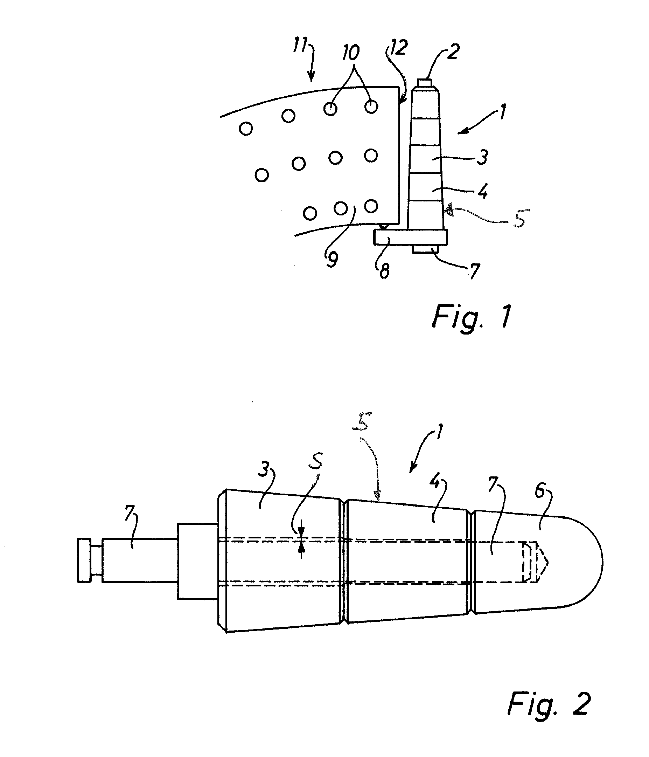

Die in Figur 1 dargestellte Vorrichtung zum Verschweissen von Kunststoffbahnen umfasst eine Heissluftdüse 11 und einen Düsen-Vorsatz 1. Die Heissluftdüse 11 weist eine schlitzartige Austrittsöffnung 12 auf, aus welcher die Heissluft austreten kann. Im Bereich dieser Austrittsöffnung 12 des Düsenkörpers 9 sind Perforationen bzw. Kleinstlochungen 10 vorgesehen. Die aus diesen Perforationen austretende Heissluft führt zu einer ersten Erweichung der übereinander angeordneten Folienbahnen. Dieser Austrittsöffnung 12 nachgelagert ist der Düsen-Vorsatz 1, welcher eine Schleifeinrichtung, einen Schleifkörper 5, umfasst. Der Schleifkörper 5 kann aus mehreren, nebeneinander angeordneten Schleifkörperelementen, Schleifwalzen 3, 4 gebildet sein. Der Schleifkörpers 5 wird von einem seitlichen Haltebügel 8 gehalten. Die einzelnen Schleifwalzen 3, 4 sind auf einer Achse 7 aufgereiht und bilden eine sich konisch verjüngende Walzenanordnung. Die Schleifwalzen werden mittels einer Halterung 2 auf der Achse 7 gehalten. Beim Verschweissen zweier Kunststoffbahnen werden diese über den Düsenkörper 9 und den nachgelagerten Düsen-Vorsatz 1 geführt. Dabei können sich die einzelnen Schleifwalzen 3, 4 in Abhängigkeit von den auf sie wirkenden Reibkräften gegeneinander verdrehen. Diese unterschiedlichen Reibkräfte werden durch Unebenheiten im Bereich der zu bildenden Schweissnaht und durch Unterschiede in der lokalen Oberflächenbeschaffenheit erzeugt.

Figur 2 zeigt eine schematische Darstellung eines besonders vorteilhaften Schleifkörpers 5. Dieser Schleifkörper 5 weist drei Schleifkörperelemente 3, 4, 6 auf, welche auf einer gemeinsamen Lagerachse 7 gehalten werden. Vorteilhafterweise ist das äusserste Schleifkörperelement 6 mit dieser Lagerachse 7 fest verbunden, insbesondere selbsthemmend verschraubt. Die anderen Schleifkörperelemente 3, 4 weisen eine Bohrung auf, deren Durchmesser grösser ist als der Durchmesser der Lagerachse 7. Dadurch werden diese Schleifkörperelemente 3, 4 mit einem gewissen Spiel S auf der Lagerachse 7 gehalten. Vorteilhafterweise werden die einzelnen Schleifkörperelemente 3, 4 so ausgebildet, dass diese ein unterschiedlich grosses, radiales Spiel S aufweisen. In einer bevorzugten Ausführungsform weist die Lagerachse 7 einen Durchmesser von 3,5 mm auf, während die Schleifkörperelemente 3, 4 jeweils einen Bohrungsdurchmesser von 3,8 resp. 3,6 mm aufweisen. Diese Konstruktion erlaubt es, den lokal unterschiedlichen Reibkräften und den Unebenheiten im Bereich der zu schaffenden Schweissnaht in optimaler Weise Rechnung zu tragen. Insbesondere führt die Beweglichkeit der einzelnen Schleifkörperelemente zu einer wesentlichen Reduktion bei der Bildung von Schlacken, welche die Schweissgüte beeinträchtigen. Es versteht sich, dass der Schleifkörper 5 auch aus vier, fünf oder mehr Schleifkörperelementen gebildet sein kann. Vorteilhafterweise weist der Schleifkörper 5 eine sich konisch sich verjüngende Form auf, kann aber auch einfacherweise walzenförmig sein. Der Querschnitt der einzelnen Schleifkörperelemente 3, 4, 6 kann dabei kreisförmig, ellipsenförmig, flügelprofilförmig oder ein kantiges Profil aufweisen. Es hat sich als besonders vorteilhaft erwiesen, dass die einzelnen Schleifkörperelemente 3, 4, 6 aus einem metallischen Material gefertigt sind, insbesondere aus Wolfram oder einer Kupferlegierung. Es versteht sich, dass diese Schleifkörperelemente 3, 4, 6 auch nur mit einer geeigneten antihaftenden Beschichtung versehen sein können. Der Fachmann wird bei der Wahl eines geeigneten Materials die Temperaturbeständigkeit, Wärmeleitfähigkeit, Verschleissfestigkeit, Korrosionsfestigkeit, etc. in Betracht ziehen.

Vorteilhafterweise weisen die Schleifkörperelemente 3, 4, 6 eine exzentrische Bohrung auf, wobei deren Durchmesser auch hier grösser ist als der Durchmesser der Lagerachse 7. Dadurch können sich die einzelnen Schleifkörperelemente noch besser an auf der Unterlage auftretende Unebenheiten anpassen und die Verschweissung wird verbessert.

In einer Weiterbildung der Schleifkörperelemente 3, 4, 6 weisen diese eine strukturierte Oberfläche auf und sind insbesondere gerillt oder schraubenartig strukturiert. Diese besondere Oberflächengestaltung erlaubt es, den Schleifkörper 5 an die jeweilige Beschaffenheit der zu verschweissenden Kunststoffbahnen optimal anzupassen.

Es versteht sich von selbst, dass für die hier vorliegende Erfindung auch andere Schleifkörper 5 verwendet werden können, als vorgängig beschrieben. Insbesondere können auch Schleifkörper verwendet werden, wie sie in der EP 1 358 993 beschrieben werden.

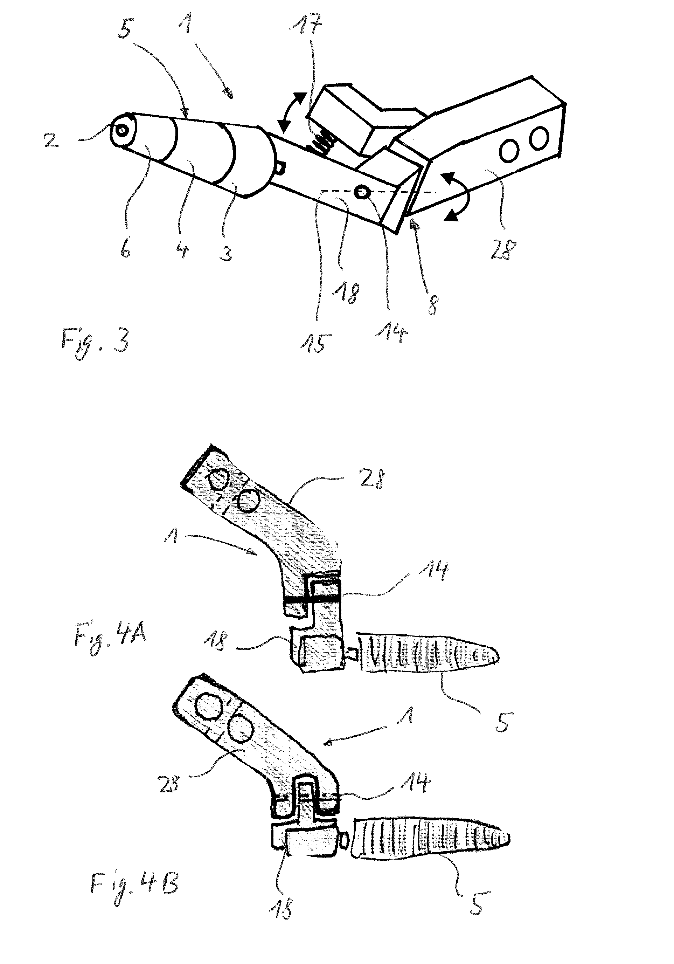

In Fig. 3 ist die Vorrichtung mit beweglichem Düsen-Vorsatz 1 im Detail dargestellt. Der Schleifkörper 5 wird über den Haltebügel 8 mit der Heissluftdüse 11 verbunden, welche hier nicht dargestellt ist. Der Haltebügel 8 besteht hier erfindungsgemäss aus zwei Teilen 18 und 28, welche beweglich miteinander verbunden sind. Diese beiden Teile 18, 28 des Haltebügels 8 sind hier mittels eines Drehgelenks 14 beweglich miteinander verbunden, so dass der Schleifkörper 5 um die Achse 15 gegenüber der Heissluftdüse verdrehbar ist. Nach Fig. 5 kann dabei die Auslenkung begrenzt werden, so dass nur einen Auslenkung um den Winkel 16 möglich ist. Diese Begrenzung kann natürlich auch auf eine andere Art erfolgen, als in Fig. 5 dargestellt. Über ein Kraftelement 17, hier eine Feder, wird das Teil 18 an die untere Begrenzung des Gelenks gedrückt. Durch die geeignete Wahl der Federkennlinie wird sichergestellt, dass der Düsenvorsatz 1 mit definierter Kraft auf der Oberfläche der unteren zu verschweissenden Bahn aufliegt. Das Kraftelement kann auch aus anderen Materialien hergestellt werden, z.B. als elastischer Kunststoffkörper, usw.
Beim Verschweissen wird nun die Vorrichtung über die untere Bahn oder die Bahn über die Vorrichtung bewegt, über den beweglich gehaltenen Schleifkörper 5 passt sich dieser automatisch der Lage der unteren Bahn an, so dass Unebenheiten einfach ausgeglichen werden können und in jeder Position ein genügender Anpressdruck erzielt werden kann. Somit liegt der Düsenvorsatz immer mit definierter Kraft auf der unteren zu verschweissenden Bahn. Damit entsteht eine konstante, gute Nahtqualität, insbesondere bei T-Stössen kann so eine gute Nahtqualität erzielt werden.

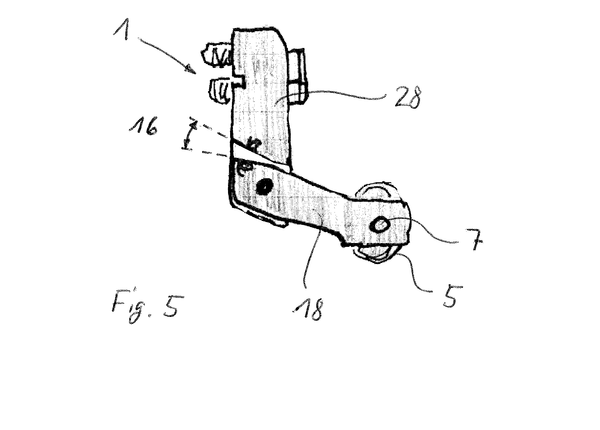

In Fig. 4A und 4B sind mögliche Ausgestaltungen des Gelenks 14 dargestellt. Die Ausgestaltung des Gelenks ist dabei an sich beliebig und muss jeweils den auftretenden Kräften angepasst werden. Es können auch andere Gelenke wie z.B. Kugelgelenke, usw. verwendet werden.

Der erfindungsgemässe Düsen-Vorsatz lässt sich in einfacher Weise an bestehende Warmgas-Schweissgeräte jeder Art befestigen, insbesondere auch an Schweissgeräte zur Erzeugung einer Einfach- oder Doppel-Naht. Darüber hinaus lassen sich mit diesem Düsen-Vorsatz auch Dekorprofile oder - zur Imitation von Stehfalzdächern - Battonprofile aus Kunststoff direkt auf bereits verlegte Kunststoffbahnen aufschweissen.

Selbstverständlich ist die Erfindung nicht auf das gezeigte und beschriebene Ausführungsbeispiel beschränkt.

## Patentansprüche

1. Vorrichtung (1, 11) zum Verschweissen von Kunststoffbahnen, umfassend einen Düsen-Vorsatz (1), wobei der Düsen-Vorsatz (1) einen Schleifkörper (5) aufweist, **dadurch gekennzeichnet, dass** der Düsen-Vorsatz (1) beweglich gehalten ist.

2. Vorrichtung nach Anspruch 1, **dadurch gekennzeichnet, dass** der Düsen-Vorsatz (1) ein Kraftelement (17) umfasst, mittels dessen der Schleifkörper (5) an die zu verschweissende Kunststoffbahn anpressbar ist.

3. Vorrichtung nach Anspruch 2, **dadurch gekennzeichnet, dass** das Kraftelement (17) ein elastisches Element, insbesondere eine Feder ist.

4. Vorrichtung nach Anspruch 1, 2 oder 3, **dadurch gekennzeichnet, dass** der Düsen-Vorsatz (1) einen Haltebügel (8) umfasst, dass der Haltebügel (8) aus zwei Teilen (18, 28) besteht, welche mittels eines Gelenks (14) miteinander verbunden sind.

5. Vorrichtung nach Anspruch 2, 3 oder 4, **dadurch gekennzeichnet, dass** das Kraftelement (17) auf die zwei Teile (18, 28) des Haltebügels (8) einwirkt.

6. Vorrichtung nach einem der vorhergehenden Ansprüche, **dadurch gekennzeichnet, dass** der Schleifkörper (5) aus mehreren Schleifkörperelementen (3, 4, 6) besteht.

7. Vorrichtung nach Anspruch 6, **dadurch gekennzeichnet, dass** die einzelnen Schleifkörperelemente (3, 4, 6) radial gegeneinander versetzbar sind.

8. Vorrichtung nach Anspruch 6 oder 7, **dadurch gekennzeichnet, dass** die einzelnen Schleifkörperelemente (3, 4, 6) ein unterschiedlich grosses, radiales Spiel (S) zur Lagerachse (7) aufweisen.

9. Vorrichtung nach Anspruch 6, 7 oder 8, **dadurch gekennzeichnet, dass** die einzelnen Schleifkörperelemente (3, 4, 6) eine exzentrische Bohrung aufweisen.

10. Vorrichtung nach einem der vorhergehenden Ansprüche, **dadurch gekennzeichnet, dass** der Querschnitt des Schleifkörpers (5) oder der Schleifkörperelemente (3, 4, 6) kreis-, ellipsen- oder tropfenförmig ist.

11. Vorrichtung nach einem der vorhergehenden Ansprüche, **dadurch gekennzeichnet, dass** der Schleifkörper (5) oder die Schleifkörperelemente (3, 4, 6) aus einem metallischen Material gefertigt sind.

12. Vorrichtung nach einem der vorhergehenden Ansprüche, **dadurch gekennzeichnet, dass** der Schleifkörper (5) walzenförmig ist oder eine sich konisch verjüngende Form aufweist.

13. Vorrichtung nach einem der Ansprüche 6 bis 12 **dadurch gekennzeichnet, dass** die einzelnen Schleifkörperelemente (3, 4, 6) eine glatte oder strukturierte Oberfläche aufweisen.

14. Vorrichtung nach Anspruch 13 **dadurch gekennzeichnet, dass** die einzelnen Schleifkörperelemente (3, 4, 6) gerillt oder schraubenartig strukturiert sind.

15. Vorrichtung nach einem der vorhergehenden Ansprüche, **dadurch gekennzeichnet, dass** der Schleifkörper (5) über eine Halterung (2) derart gehalten ist, dass der Schleifkörper (5) auswechselbar ist.
